# EUROPÄISCHE PATENTANMELDUNG

(11) **EP 4 834 468 A1**
(43) Veröffentlichungstag der Anmeldung: **04.11.2026**
(21) Anmeldenummer: 25173328.3
(22) Anmeldetag: 29.04.2025
(51) Int. Cl.: B01J 19/24

(54) **HEIZER-REFORMER-ANORDNUNG**

(71) Anmelder: Sunfire SE, 01237 Dresden (DE)
(72) Erfinder: Bachmann, John, 01277 Dresden (DE); Surrey, Alexander, 01219 Dresden (DE); Blumentritt, Robert, 01159 Dresden (DE)
(74) Vertreter: Hauck Patent- und Rechtsanwälte PartmbB

(57) **Zusammenfassung**

Heizer-Reformer-Anordnung zur Umwandlung eines kohlenwasserstoffreichen Eduktgases (E) in ein wasserstoffreiches Produktgas (P), umfassend wenigstens ein Gehäuse mit einem Innenraum, und wenigstens einer im Innenraum des Gehäuses angeordneten Stackanordnung, wobei die Stackanordnung mehrere in eine Stapelrichtung (S) gestapelte plattenartig ausgeführte, jeweils eine katalytisch wirksame Beschichtung aufweisende Reformerzellen umfasst, wobei zwischen benachbart angeordneten Reformerzellen jeweils ein Abstandshalteelement angeordnet ist, und wobei die Stackanordnung für den Durchgang eines Gases durch die Stackanordnung ausgebildet und eingerichtet ist, derart dass ein an die Stackanordnung geführtes Eduktgas (E) zwischen den Reformerzellen geführt ist und dabei die mit der katalytischen Beschichtung versehenen Oberflächenbereiche der Reformerzellen überstreicht, wobei die Reformerzellen und die Abstandshalteelemente lose und zerstörungsfrei trennbar in der Stackanordnung aufeinandergestapelt sind.

## Beschreibung

Die Erfindung betrifft eine Heizer-Reformer-Anordnung zur Umwandlung eines kohlenwasserstoffreichen Eduktgases in ein wasserstoffreiches Produktgas gemäß dem Oberbegriff des Anspruchs 1.

Heizer-Reformer-Anordnungen der gattungsgemäßen Art dienen der Erzeugung eines wasserstoffreichen Synthesegases durch katalytische Umwandlung kohlenwasserstoffhaltiger Edukte. Solche Reformer-Anordnungen umfassen eine Mehrzahl von Reformerzellen, die stapelartig in einem Stack angeordnet sind und voneinander beabstandet gehalten werden. Die Reaktionsflächen der Reformerzellen sind mit einer katalytisch wirksamen Beschichtung versehen. Diese Reaktionsflächen werden von dem zugeführten Eduktgas angeströmt, wodurch die chemische Umwandlung - z. B. von Methan und Wasserdampf zu Wasserstoff und Kohlenmonoxid - auf der aktiven Katalysatorschicht initiiert und unterstützt wird. Bei der Umwandlung von kohlenwasserstoffhaltigen Gasen kann es zur Rußbildung kommen. Die Rußbildung wird unter anderem von der Prozesstemperatur und der Länge der Kohlenwasserstoffverbindungen beeinflusst. Kohlenstoffablagerung auf der katalytisch wirksamen Beschichtung können die Oberfläche blockieren, Poren verstopfen und letztlich den Katalysator deaktivieren (sog. "Coking").

Ein Problem herkömmlicher Reformer-Anordnungen besteht darin, dass diese gar nicht oder nur unter erhöhtem Aufwand zu warten sind. Lassen sich die einzelnen Komponenten nicht ohne Aufwand oder Beschädigung voneinander trennen und regenerieren, ist das sowohl bezüglich der Betriebskosten als auch aus Sicht der Nachhaltigkeit nachteilig, da Reformer ersetzt werden müssen und sich verbrauchte Anordnungen schlecht oder gar nicht recyclen lassen bzw. nur ein Downcycling möglich ist.

Der Erfindung liegt die Aufgabe zugrunde, eine Heizer-Reformer-Anordnung bereitzustellen, welche sich auf einfache Weise zerlegen und regenerieren lässt.

Die Aufgabe wird gelöst durch eine Heizer-Reformer-Anordnung mit den Merkmalen des Anspruchs 1. Vorteilhafte Ausgestaltungen sind in den Unteransprüchen angegeben.

Erfindungsgemäß ist eine Heizer-Reformer-Anordnung zur Umwandlung eines kohlenwasserstoffreichen Eduktgases in ein wasserstoffreiches Produktgas, umfassend wenigstens ein Gehäuse mit einem Innenraum, und wenigstens einer im Innenraum des Gehäuses angeordneten Stackanordnung, wobei die Stackanordnung mehrere in eine Stapelrichtung gestapelte plattenartig ausgeführte, jeweils eine katalytisch wirksame Beschichtung aufweisende Reformerzellen umfasst, wobei zwischen benachbart angeordneten Reformerzellen jeweils ein Abstandshalteelement angeordnet ist, und wobei die Stackanordnung für den Durchgang eines Gases durch die Stackanordnung ausgebildet und eingerichtet ist, derart dass ein an die Stackanordnung geführtes Eduktgas zwischen den Reformerzellen geführt ist und dabei die mit der katalytischen Beschichtung versehenen Oberflächenbereiche der Reformerzellen überstreicht, wobei die Reformerzellen und die Abstandshalteelemente lose und zerstörungsfrei trennbar in der Stackanordnung aufeinandergestapelt sind.

Die plattenartig ausgeführten Reformerzellen sind erfindungsgemäß in einer Stackanordnung gestapelt. Die Plattenebene der Zellen erstreckt sich dabei senkrecht zur Stapelrichtung. Auf der Oberseite und/oder auf der Unterseite der plattenartigen Reformerzellen ist die katalytisch wirksame Beschichtung aufgebracht, mittels der kohlenwasserstoffhaltige Stoffe in wasserstoffreiche Gase umwandelbar sind.

Erfindungsgemäß sind die Reformerzellen und die Abstandshalteelemente lose und zerstörungsfrei trennbar aufeinandergestapelt. Diese Anordnung ist also insbesondere unter Verzicht von stoffschlüssigen Verbindungen wie Verkleben, Verlöten, Sinterfügen oder Verschweißen ausgeführt.

Um eine elektrische Aufwärmung der Stackanordnung zu ermöglichen, ist in einer Ausgestaltung vorgesehen, dass zumindest einige Reformerzellen jeweils elektrisch leitend mit den an die Reformerzellen angrenzenden Abstandshalteelementen kontaktiert sind, derart, dass ein Stromfluss zwischen einer in Stapelrichtung ersten elektrisch leitend mit einem ersten Pol einer elektrischen Versorgungseinrichtung verbundenen Reformerzelle und einer in Stapelrichtung letzten elektrisch leitend mit einem zweiten Pol einer elektrischen Versorgungseinrichtung verbundenen Reformerzelle ermöglicht ist. Die Beheizung der erfindungsmäßen Reformer-Anordnung erfolgt vorzugsweise elektrisch, um eine kompakte und präzise regelbare Temperaturführung zu ermöglichen.

Vorzugsweise sind die Abstandshalteelemente elektrisch leitend oder sie haben elektrisch leitende Strukturen, sodass ein Stromfluss zwischen zwei benachbarten Reformerzellen über den zwischen diesen Reformerzellen angeordneten Abstandshalteelemente stattfinden kann. Sind mehrere aufeinanderfolgende Reformerzellen mit derartigen Abstandshalteelementen beabstandet, kann ein Stromfluss von einer ersten Reformerzelle dieser Anordnung bis zu einer zweiten Reformerzelle dieser Anordnung und aller dazwischen angeordneten Reformerzellen stattfinden. Die elektrische Kontaktierung der lose aufeinander gestapelten Reformerzellen und Abstandshalteelementen kann mittels einer Verspannung der Stackanordnung in Stapelrichtung verbessert werden. Damit liegen die einzelnen Elemente eng aneinander und ermöglichen damit eine stromleitende Verbindung.

Die Langlebigkeit, Effizienz und Sicherheit der Reformeranordnung kann dadurch erhöht werden, dass die Reformerzellen aus Nickel, einem Nickelstahl oder Nickel-Chrom-Stahl ausgebildet sind. Die Verwendung von Nickel bzw. Nickellegierungen sorgt für eine hohe Temperaturbeständigkeit der Anordnung auch bei Temperaturen von zum Beispiel 600 bis 900 °C, bei denen Reformerprozesse ablaufen. Besonders gute katalytische Aktivitäten der Reformerzellen werden erreicht bei der Verwendung von reinem Nickel. Schließlich haben die genannten Materialien gute mechanische Eigenschaften bei hohen Temperaturen. Dazu zählen eine hohe Kriechfestigkeit und eine hohe Formstabilität. Bevorzugt sind die einzelnen Reformerzellen als Bleche mit einer Blechstärke im Bereich zwischen etwa 0,35 bis 5 mm ausgeformt.

Für eine hohe katalytische Effizienz der Reformer-Anordnung ist daran gedacht, dass die katalytisch wirksame Beschichtung zumindest einiger Reformerzellen aus einer Nickel-Schicht oder einem anderen Übergangsmetall wie zum Beispiel Cobalt (Co), Platin (Pt), Rhodium (Rh), Palladium (Pd), Eisen (Fe) oder einem Gemisch aus Übergangsmetallen ausgebildet ist. Die Gruppe der Übergangsmetalle Stoffe der Gruppen 3 im 12 im Periodensystem.

Die katalytische Effizienz der Reformeranordnung kann weiter dadurch gesteigert werden, dass die katalytisch wirksame Beschichtung zumindest einiger Reformerzellen einen oder mehrere, die Koksbildung verhindernde und/oder die Redox-Eigenschaften verbessernde Promotoren enthält. Mit derartigen Promotoren kann die Gefahr einer Koksbildung innerhalb der gasführenden Strukturen der Reformer-Anordnung reduziert werden. Solche Promotoren können insbesondere Materialien aus der Gruppe Lanthan (La), Strontium (Sr), Kalium (K), Ceroxid (CeO₂) oder Zirkonoxid (ZrO₂) aufweisen, oder aus einem dieser Materialien bestehen. Die Gefahr einer Koksbildung wird beispielsweise gut mit Lanthan (La), Strontium (Sr), Kalium (K) reduziert. Eine Verbesserung der Redox-Eigenschaft lässt sich gut mit Ceroxid (CeO₂) oder Zirkonoxid (ZrO₂) erzielen.

In einer Ausgestaltung ist daran gedacht, dass die katalytisch aktive Beschichtung zumindest einiger Reformerzellen texturiert ist. Damit kann die wirksame Oberfläche der Reformerzellen vergrößert werden, ohne die Ausdehnung der Reformerzellen zu erhöhen.

In einer bevorzugten Ausgestaltung ist vorgesehen, dass die katalytisch wirksame Beschichtung zumindest einiger Reformerzellen eine spezifische Oberfläche von 50 - 300 m²/g aufweist und/oder die katalytisch wirksame Beschichtung zumindest einiger Reformerzellen einen arithmetischen Mittenrauwert von 50 nm bis 10 µm aufweisen.

Eine großflächige Kontaktierung der Reformerzellen mit Eduktgas und Produktgas bei gleichzeitig stabiler Beabstandung der Reformerzellen kann dadurch unterstützt werden, dass die Abstandshalteelemente als ein das Eduktgas und das Produktgas durchlassendes Drahtgeflecht, z.B. ein gewobenes Metallnetz, oder als ein das Eduktgas und das Produktgas durchlassender Metallschaum ausgeführt sind. Auch die Abstandshalteelemente können aus Nickel, einem Nickelstahl oder Nickel-Chrom-Stahl hergestellt sein, oder diese Materialien aufweisen.

Die Reformereffizienz kann dadurch erhöht werden, dass zumindest einige der Abstandshalteelemente katalytisch wirksame Oberflächen aufweisen, insbesondere mit den Eigenschaften der katalytisch wirksamen Beschichtung der Reformerzellen wie zuvor beschrieben.

In einer bevorzugten Ausgestaltung ist daran gedacht, dass die Stackanordnung innerhalb des Gehäuses zumindest auf zwei quer zur Stapelrichtung gegenüberliegenden Seiten von Wärmedämmelementen eingefasst ist. Solche erfindungsgemäßen Wärmedämmelemente weisen ein thermisch isolierendes Dämmmaterial auf. Diese Dämmeinrichtung ist vorzugsweise derart in dem Gehäuse angeordnet, dass die Stackanordnung und die Wärmedämmelemente zerstörungsfrei und wiedereinsetzbar aus dem Gehäuse entnehmbar ist. Dies ermöglicht einen kostenschonenden Austausch bzw. ermöglicht eine Reparatur einzelner Elemente der Reformer-Anordnung bei Wartungs- oder Reparaturarbeiten. Beispielsweise können einzelne Reformerzellen oder Abstandshalteelemente einfach und ohne hohen Montage- bzw. Kostenaufwand ausgetauscht werden.

Vorzugsweise kann vorgesehen sein, dass zumindest einige Wärmedämmelemente als Dämmplatten ausgeführt sind, mit denen die Stackanordnung eingefasst ist. Denkbar ist, dass seitlich bzw. oberhalb oder unterhalb der Stackanordnung ein Verbund bestehend aus zwei oder mehr als zwei Schichten von Dämmplatten verwendet wird und/oder Dämmplatten, die einen Kern aufweisen, der von einer Schale ummantelt ist. Solche sandwichartigen Anordnungen von aneinander angrenzend angeordneten Dämmplatten können vorteilhafte oder gewünschte mechanischen Eigenschaften oder thermischen Dämmeigenschaften bewirken. Beispielsweise ist denkbar innenliegend, also als Kern bzw. der Stackanordnung zugewandt zum Beispiel eine Al₂O₃-Keramik vorzusehen. Diese kann außen bzw. auf der der Stackanordnung abgewandten Seite z.B. von Mica/Glimmer-Matten umgeben abgegrenzt sein. Diese sind zu einem gewissen Grad kompressibel.

Die Wärmedämmelemente sind vorzugsweise temperaturstabil und können derart angeordnet sein, dass sie die Stackanordnung so abdichten, dass das Eduktgas im Wesentlichen nur durch die Stackanordnung strömen kann und ein Entweichen zur Seite hin ins Gehäuse behindert wird.

In einer Ausgestaltung ist daran gedacht, dass das Dämmmaterial eine AlOx-Keramik, Glimmer und/oder Beton aufweisen. Beispielsweise können steife AlOx-Platten und kompressible Glimmer-Matten vorgesehen sein. Diese können in einem Schichtverbund seitlich, oberhalb und/oder unterhalb der Stackanordnung angeordnet sein.

In einer bevorzugten Ausgestaltung kann vorgesehen sein, dass die Stackanordnung innerhalb des Gehäuses in Stapelrichtung oben und/oder unten von Wärmedämmelementen eingefasst ist. Vorzugsweise kann die Einfassung lückenlos gasdicht mit seitlicher Einfassung ausgeführt sein.

Für die Erhöhung der mechanischen Stabilität der Stackanordnung ist in einer möglichen Ausgestaltung daran gedacht, dass die Anordnung mindestens eine ein oder mehrere Spannelemente aufweisende Spannvorrichtung umfasst, mittels der eine axial entlang der Stapelrichtung auf die Stackanordnung wirkende Spannkraft aufbringbar ist.

Die Spannelemente können sich beispielsweise einerseits an dem Gehäuse abstützen und andererseits auf die obere Dämmplatte und damit mittelbar auf die Stackanordnung verspannend wirken. Denkbar ist aber auch, die Spannelemente derart anzuordnen, dass die Spannkraft ausschließlich auf die Stackanordnung wirkt, ohne Abstützung am Gehäuse. Dies könnte beispielsweise mit die Stackanordnung übergreifende Zugstangen bewirkt werden, die in Stapelrichtung oben und unten gegen die Stackanordnung bzw. gegen oben und/oder unten angeordnete Wärmedämmelemente abgestützt ist.

In einer ersten Ausgestaltung ist hinsichtlich der Verspannung der Stackanordnung daran gedacht, dass die Spannelemente mindestens eine Spannfeder und/oder ein kompressibles Glasfasermaterial und/oder die Stackanordnung axial entlang der Stapelrichtung übergreifende Zugstangen umfassen. Mit derartigen Zugstangen ist die Stackanordnung axial entlang der Stapelrichtung einspannbar.

Das erste und das letzte Element der Heizer-Reformer-Anordnung können aus einem Blech mit einer gegenüber den übrigen Reformerzellen erhöhten Blechstärke ausgeführt sein. Die Blechstärke der übrigen Reformerzellen kann beispielsweise 0,7 mm betragen, während die erste und die letzte Reformerzellen aus einem Blech mit einer Stärke von beispielsweise größer oder gleich 2 mm, insbesondere mit einer Stärke von 5 mm ausgeführt sind. Alternativ kann die Heizer-Reformer-Anordnung auch eine erste und eine zweite Endplatte aufweisen, welche die Stackanordnung in Stapelrichtung oben und unten einfassen, also flächig mit der ersten und der letzten Reformerzelle der Stackanordnung abschließen. Eine solche Ausführung kann vorteilhaft sein, um eine Stabilität der Stapelanordnung zu gewährleisten und die bei der Verspannung der Anordnung auftretenden Kräfte homogen in die Stackanordnung einzuleiten und auf diese Weise zu vermeiden, dass einzelne Reformerzellen oder Abstandshalteelement plastisch verformt werden.

Zur Einleitung eines elektrischen Stroms in die Stackanordnung, mit dem die Stackanordnung elektrisch auf eine Betriebstemperatur beispielsweise von mehr als 600 °C beheizbar ist, kann vorgesehen sein, dass zumindest einige der Spannelemente elektrisch leitend verbunden sind mit den für die Leistungsversorgung vorgesehenen elektrischen Anschlüssen der Stackanordnung. Dadurch kann mittels der Spannelemente ein erster elektrischer Anschluss der Stackanordnung mit einer in Stapelrichtung ersten Reformerzelle und ein zweiter elektrischer Anschluss der Stackanordnung mit einer in Stapelrichtung letzten Reformerzelle kontaktiert sein. Dies ermöglicht die Beaufschlagung der Stackanordnung zwischen dem ersten und letzten Reformerzelle mit einem elektrischen Strom, der zur Erwärmung der Reformerzellen auf eine Betriebstemperatur dient. Alternativ kann die Kontaktierung auch über die erste und zweite Endplatte erfolgen.

Um die Austauschbarkeit einzelner Elemente der Reformer-Anordnung zu erweitern ist in einer weiteren Ausgestaltung daran gedacht, dass die Heizer-Reformer-Anordnung in einer Betriebsanordnung derart zusammengesetzt ist, dass die Reformerzellen und die Wärmedämmelemente zerstörungsfrei aus dem Gehäuse entnehmbar und jeweils zerstörungsfrei voneinander trennbar zueinander angeordnet sind. Die Reformerzellen, Abstandshalteelemente und ggf. Endplatten können nach dem Lösen der Spannelemente einzeln entnommen und einer Wiederaufarbeitung zugeführt werden. Je nach Zustand der einzelnen Bauelemente können diese gereinigt und wiederverwandt oder ersetzt werden. Ist eine Reinigung nicht möglich, ermöglicht die erfindungsgemäße Heizer-Reformer-Anordnung, dass die einzelnen Bauelemente auf einfache Weise getrennt, sortiert und recycelt werden können.

Die Erfindung wird in den nachfolgenden Figuren näher erläutert. Es zeigen
- Fig. 1: eine schematisierte Darstellung einer Heizer-Reformer-Anordnung in einer Frontalansicht,
- Fig. 2: eine schematisierte Darstellung einer Heizer-Reformer-Anordnung in einer isometrischen Ansicht mit Manifoldstrukturen für die Zuführung von Eduktgas und die Abführung von Produktgas,
- Fig. 3: eine schematisierte Darstellung der Heizer-Reformer-Anordnung aus Fig. 1 mit einer elektrischen Kontaktierung der Reformerzellen und einer Spannvorrichtung einer ersten Variante, und
- Fig. 4: eine schematisierte Darstellung der Heizer-Reformer-Anordnung aus Fig. 1 mit einer elektrischen Kontaktierung der Reformerzellen und einer Spannvorrichtung einer zweiten Variante.

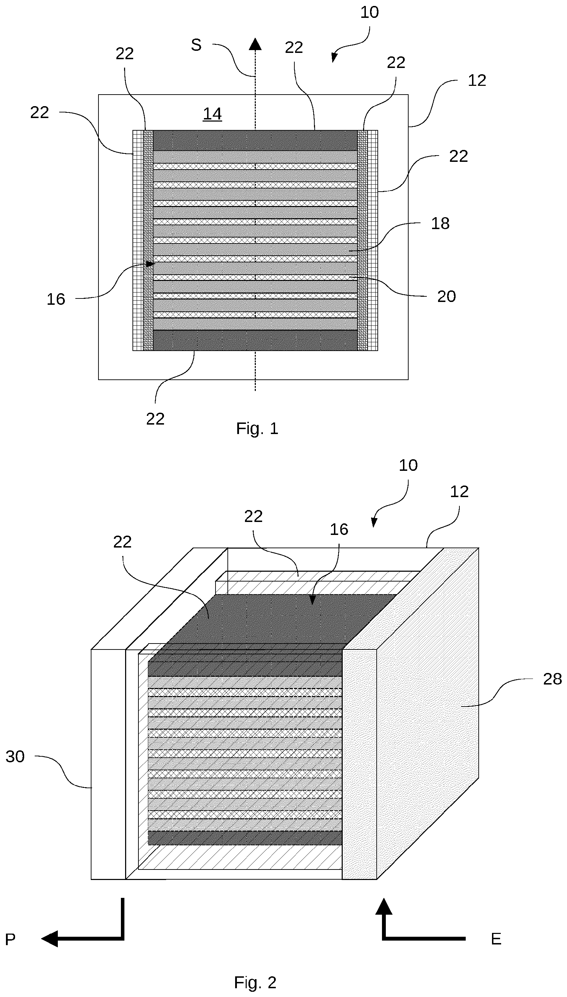

Figur 1 zeigt eine starke schematisierte Ansicht einer erfindungsgemäßen Heizer-Reformer-Anordnung 10. Die Heizer-Reformer-Anordnung 10 weist ein Gehäuse 12 auf, in dessen Innenraum 14 eine Stackanordnung 16 angeordnet ist. Die Stackanordnung 16 umfasst mehrere Reformerzellen 18, die jeweils mittels Abstandshalteelementen 20 voneinander beabstandet in der Stackanordnung 16 platziert sind. Die Reformerzellen 18 und die dazwischen angeordneten Abstandshalteelementen 20 sind in einer Stapelrichtung S von unten nach oben übereinandergestapelt angeordnet. In Stapelrichtung unten und in Stapelrichtung oben ist die Stackanordnung 16 jeweils mit einem als Dämmplatte ausgeführten Wärmedämmelement 22 bedeckt. Zu beiden Seiten der Stackanordnung 16, in Bildebene links und rechts, ist die Stackanordnung 16 ebenfalls mit als Dämmplatten ausgeführten Wärmedämmelementen 22 bedeckt. Die Wärmedämmelemente 22 auf den beiden Seiten der Stackanordnung 16 sind in dieser Variante doppelschichtig ausgeführt. Das heißt, in dieser Variante bestehen die seitlichen angeordneten Wärmedämmelemente 22 aus zwei aneinander angrenzend angeordneten Dämmplatten einer Doppelschicht. Die innenliegende Dämmplatte kann beispielsweise aus einem von Mica/Glimmer-Matten hergestellt sein und die außenliegende Dämmplatte kann aus einer Al₂O₃-Keramik hergestellt sein. Die Doppelschicht verbessert zum einen die thermische Isolierung, da ein weiterer Wärmeübergang erfolgt, zum anderen verbessert sie die Abdichtung der Stackanordnung 16 gegenüber dem Gehäuse 12, so dass Gas, welches in einer Richtung senkrecht zur Darstellungsebene an die Stackanordnung 16 herangeführt wird im Wesentlichen durch die Stackanordnung 16 und nicht an ihr vorbei geführt wird.

Figur 2 zeigt eine stark schematisierte Ansicht einer erfindungsgemäßen Heizer-Reformer-Anordnung 10. Ähnlich wie die Reformer-Anordnung 10 aus Figur 1, ist eine Stackanordnung 16 in einem Innenraum 14 eines Gehäuses 12 angeordnet. Die Stackanordnung 16 enthält - wie in Fig. 1 - mehrere mit Abstandshalteelementen 20 beabstandete Reformerzellen 18. In Stapelrichtung unten und oben ist die Stackanordnung 16 mit Wärmedämmplatten 22 bedeckt. In dieser Ansicht ist die Heizer-Reformer-Anordnung mit einer an die Stackanordnung 16 gekoppelten Eduktgas-Manifoldstruktur 28 gezeigt. Mittels der Eduktgas-Manifoldstruktur 28 wird Eduktgas E in die von den Abstandshalteelementen 20 besetzten Zwischenräume zwischen den Reformerzellen 18 geleitet. Die Abstandshalteelemente 20 sind gasdurchlässig ausgeführt, so dass ein in die Zwischenräume geleitetes Gas von der eingangsseitig an die Stackanordnung 16 angeschlossenen Eduktgas-Manifoldstruktur 28 bis an eine ausgangsseitig an die Stackanordnung 16 angeschlossene Produktgas-Manifoldstruktur 30 geführt werden kann. Bei der Durchleitung von Eduktgas E durch die Zwischenräume zwischen den Reformerzellen 18 werden mit einer katalytisch wirksamen Beschichtung beschichtete Oberflächenbereiche der Reformerzellen 18 überstrichen. Mittels einer dabei einsetzenden katalytischen Reaktion wird das Eduktgas E in das gewünschte Produktgas P umgewandelt. Das mittels der katalytischen Reaktion gewonnene Produktgas P wird zwangsgeführt in eine ausgangsseitig an die Stackanordnung 16 angeschlossene Produktgas-Manifoldstruktur 30 geführt.

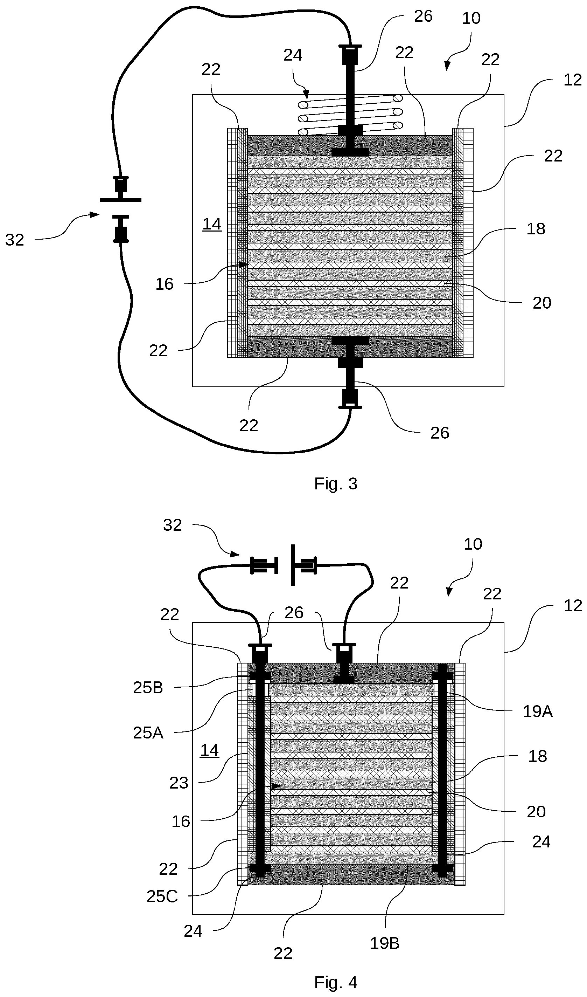

Die Figuren 3 und 4 zeigt die Heizer-Reformer-Anordnung 10 aus Figur 1 mit daran angeschlossenen elektrischen Anschlüssen 26. Es sind zwei elektrische Anschlüsse 26 gezeigt, die jeweils mit einer ersten unteren und einer letzten oberen Reformerzelle 18 elektrisch leitend kontaktiert sind. Die elektrischen Anschlüsse 26 sind mit einer elektrischen Energiequelle 32 elektrisch leitend verbunden. Die elektrische Energiequelle 32 kann beispielsweise eine Strom- oder Spannungsquelle sein, mittels der die Stackanordnung 16 mit einem Strom beziehungsweise mit einer Spannung beaufschlagt werden kann. Mit einem zwischen der ersten unteren und der letzten oberen kontaktierten Reformerzelle 18 fließenden Strom kann die Stackanordnung auf eine Betriebstemperatur erwärmt werden. Ein Stromfluss über mehrere Reformerzellen 18 hinweg sind die Reformerzellen vorliegend in einer Serienschaltung miteinander elektrisch kontaktiert. Die Kontaktierung benachbarter Reformerzellen 18 wird hierbei mittels elektrisch leitend ausgeführter Abstandshalteelementen 20 erreicht.

In der in Figur 3 gezeigten Variante ist innerhalb des Gehäuses 12 ein als Schraubenfeder ausgeführtes Spannelement 24 angeordnet. Das Spannelement 24 ist einerseits gegen das Gehäuse 12 und andererseits gegen die in Stapelrichtung oberhalb der Stackanordnung 16 angeordnete Dämmplatte 22 abgestützt. Mittels einer von dem Spannelement 24 in der Ruhelage aufgebrachten Spannkraft werden die Reformerzellen 18 und die Abstandshalteelemente 20 in der Stackanordnung 16 miteinander verspannt. Unten ist die Stackanordnung 16 gegen das Gehäuse abgestützt und die von dem Spannelement 24 auf die Stackanordnung 16 aufgeprägte Kraft wird über die Stackanordnung 16 und die im unteren Bereich der Stackanordnung 16 angeordnete Dämmplatte 22 in das Gehäuse 12 eingeleitet. Mit der Verspannung der Reformerzellen 18 und der Abstandshalteelemente 20 in der Stackanordnung 20 wird die elektrische Kontaktierung zwischen den Abstandshalteelementen 20 und den Reformerzellen 18 unterstützt.

In der in Figur 4 gezeigten Variante sind die Spannelemente 24 als Zugstangen ausgeführt. Die Stackanordnung 16 ist mit einer Ersten Endplatte 19A und einer Zweiten Endplatte 19B ausgeführt, die über den Rand der übrigen Reformerzellen 18 und Abstandshalteelemente 20 hinausragen. Die Zugstangen 24 verspannen die Erste Endplatte 19A und die Zweite Endplatte 19B miteinander. Die Zugstangen 24 sind durch Öffnungen der Zweiten Endplatte 19B geführt und unterhalb der Zweiten Endplatte 19B gegenüber dieser mittels einer Verschraubung 25C verschraubt. Durch die Verspannung der beiden Endplatten wird auf diese Weise mit der Unterseite der Zweiten Endplatte 19B eine elektrisch leitende Verbindung mit der Stackanordnung 16 hergestellt. Die Zugstangen 24 werden durch Wärmedämmelemente 23 elektrisch und thermisch von der Stapelanordnung 16 isoliert und an dieser vorbeigeführt. Die Zugstangen 24 sind durch Öffnungen der Ersten Endplatte 19A geführt und oberhalb der Ersten Endplatte 19A gegenüber dieser mittels einer Verschraubung 25B verschraubt. Um einen elektrischen Kontakt zwischen den Zugstangen 24 und der Ersten Endplatte 19A und damit einen Kurzschluss der Stackanordnung 16 zu vermeiden, sind die Zugstangen 24 durch eine keramische Hülse geführt. Die Verschraubung 25B ist zudem mit einer elektrisch isolierenden Unterlegscheibe ausgeführt. Wenigstens eine der Zugstangen 24 sowie die Erste Endplatte 19A sind mit elektrischen Anschlüssen versehen. Wie eingangs beschrieben, sind die elektrischen Anschlüsse 26 mit einer elektrischen Energiequelle 32 verbunden. Ein mittels der Energiequelle 32 in die Reformer-Anordnung 10 eingeleiteter Strom kann zwischen der ersten Reformerzelle 18 und der letzten Reformerzelle 18 fließen und somit zu einer elektrischen Erwärmung der Stackanordnung 16 dienen. Mittels der Zugstangen 24 kann ebenfalls eine Verspannung der in der Stackanordnung 16 angeordneten Reformerzellen 18 und der dazwischen angeordneten Abstandshalteelemente 20 erreicht werden. Dafür sind die Zugstangen 24 einerseits oben und unten andererseits oben an einer unteren bzw. einer unteren Dämmplatte 22 abgestützt. Damit kann auf eine Verspannung der Stackanordnung 16 gegen das Gehäuse 12 verzichtet werden.

### BEZUGSZEICHENLISTE

- 10: Heizer-Reformer-Anordnung
- 12: Gehäuse
- 14: Innenraum
- 16: Stackanordnung
- 18: Reformerzellen
- 19A: Erste Endplatte
- 19B: Zweite Endplatte
- 20: Abstandshalteelemente
- 22: Wärmedämmelemente
- 23: Wärmedämmelemente
- 24: Spannelemente
- 25A: Hülse
- 25B: Verschraubung mit elektrisch isolierender Unterlegscheibe
- 25C: Verschraubung
- 26: Elektrische Anschlüsse
- 28: Eduktgas-Manifoldstruktur
- 30: Produktgas-Manifoldstruktur
- 32: Elektrische Energiequelle
- S: Stapelrichtung
- E: Eduktgas
- P: Produktgas

## Patentansprüche

1. Heizer-Reformer-Anordnung (10) zur Umwandlung eines kohlenwasserstoffreichen Eduktgases (E) in ein wasserstoffreiches Produktgas (P), umfassend
wenigstens ein Gehäuse (12) mit einem Innenraum (14),
und wenigstens einer im Innenraum (14) des Gehäuses (12) angeordneten Stackanordnung (16),
wobei die Stackanordnung (16) mehrere in eine Stapelrichtung (S) gestapelte plattenartig ausgeführte, jeweils eine katalytisch wirksame Beschichtung aufweisende Reformerzellen (18) umfasst,
wobei zwischen benachbart angeordneten Reformerzellen (18) jeweils ein Abstandshalteelement (20) angeordnet ist, und wobei
die Stackanordnung (16) für den Durchgang eines Gases durch die Stackanordnung (16) ausgebildet und eingerichtet ist, derart dass ein an die Stackanordnung (16) geführtes Eduktgas (E) zwischen den Reformerzellen (18) geführt ist und dabei die mit der katalytischen Beschichtung versehenen Oberflächenbereiche der Reformerzellen (18) überstreicht,
**dadurch gekennzeichnet, dass**
die Reformerzellen (18) und die Abstandshalteelemente (20) lose und zerstörungsfrei trennbar in der Stackanordnung (16) aufeinandergestapelt sind.

2. Heizer-Reformer-Anordnung (10) nach Anspruch 1, **dadurch gekennzeichnet, dass** zumindest einige Reformerzellen (18) jeweils elektrisch leitend mit den an die Reformerzellen (18) angrenzenden Abstandshalteelemente (20) kontaktiert sind, derart, dass ein Stromfluss zwischen einer in Stapelrichtung (S) ersten elektrisch leitend mit einem ersten Pol einer elektrischen Versorgungseinrichtung verbundenen Reformerzelle (18) und einer in Stapelrichtung (S) letzten elektrisch leitend mit einem zweiten Pol einer elektrischen Versorgungseinrichtung verbundenen Reformerzelle (18) ermöglicht ist.

3. Heizer-Reformer-Anordnung (10) nach Anspruch 1 oder 2, **dadurch gekennzeichnet, dass** die Reformerzellen (18) aus Nickel, einem Nickelstahl oder Nickel-Chrom-Stahl ausgebildet sind.

4. Heizer-Reformer-Anordnung (10) nach einem der vorangegangenen Ansprüche, **dadurch gekennzeichnet, dass** die katalytisch wirksame Beschichtung zumindest einiger Reformerzellen (18) aus einer Nickel-Schicht oder einem anderen Übergangsmetall wie zum Beispiel Cobalt (Co), Platin (Pt), Rhodium (Rh), Palladium (Pd), Eisen (Fe) oder einem Gemisch aus Übergangsmetallen ausgebildet ist.

5. Heizer-Reformer-Anordnung (10) nach einem der vorangegangenen Ansprüche, **dadurch gekennzeichnet, dass** die katalytisch wirksame Beschichtung zumindest einiger Reformerzellen (18) einen oder mehrere, die Koksbildung verhindernde und/oder die Redox-Eigenschaften verbessernde Promotoren enthält.

6. Heizer-Reformer-Anordnung (10) nach einem der vorangegangenen Ansprüche, **dadurch gekennzeichnet, dass** die katalytisch aktive Beschichtung zumindest einiger Reformerzellen (18) texturiert ist.

7. Heizer-Reformer-Anordnung (10) nach einem der vorangegangenen Ansprüche, **dadurch gekennzeichnet, dass** die katalytisch wirksame Beschichtung zumindest einiger Reformerzellen (18) eine Spezifische Oberfläche (BET-Oberfläche) von 50 - 300 m²/g aufweist und/oder die katalytisch wirksame Beschichtung zumindest einiger Reformerzellen (18) einen Ra-Wert (arithmetischer Mittenrauwert) von 50 nm - 10 µm aufweisen.

8. Heizer-Reformer-Anordnung (10) nach Anspruch 1, **dadurch gekennzeichnet, dass** die Abstandshalteelemente (20) als ein das Eduktgas (E) und das Produktgas (P) durchlassendes Drahtgeflecht oder als ein das Eduktgas (E) und das Produktgas (P) durchlassender Metallschaum ausgeführt sind.

9. Heizer-Reformer-Anordnung (10) nach einem der vorangegangenen Ansprüche, **dadurch gekennzeichnet, dass** zumindest einige der Abstandshalteelemente (20) katalytisch wirksame Oberflächen aufweisen, insbesondere mit den Eigenschaften der katalytisch wirksamen Beschichtung der Reformerzellen (18) nach einem der Ansprüche 4 bis 7.

10. Heizer-Reformer-Anordnung (10) nach einem der vorangegangenen Ansprüche, **dadurch gekennzeichnet, dass** die Stackanordnung (16) innerhalb des Gehäuses (12) zumindest auf zwei quer zur Stapelrichtung (S) gegenüberliegenden Seiten von Wärmedämmelementen (22) eingefasst ist.

11. Heizer-Reformer-Anordnung (10) nach Anspruch 10, **dadurch gekennzeichnet, dass** zumindest einige Wärmedämmelemente (22) als Dämmplatten ausgeführt sind.

12. Heizer-Reformer-Anordnung (10) nach Anspruch 10 oder 11, **dadurch gekennzeichnet, dass** die Wärmedämmelemente (22) aus einer AlOx-Keramik, Glimmer und/oder Beton bestehen.

13. Heizer-Reformer-Anordnung (10) nach einem der vorangegangenen Ansprüche, **dadurch gekennzeichnet, dass** die Stackanordnung (16) innerhalb des Gehäuses (12) in Stapelrichtung (S) oben und/oder unten von Wärmedämmelementen (22) der Wärmedämmeinrichtung eingefasst ist.

14. Heizer-Reformer-Anordnung (10) nach einem der vorangegangenen Ansprüche, **dadurch gekennzeichnet, dass** die Heizer-Reformer-Anordnung (10) mindestens eine ein oder mehrere Spannelemente (24) aufweisende Spannvorrichtung umfasst, mittels der eine axial entlang der Stapelrichtung (S) auf die Stackanordnung (16) wirkende Spannkraft aufbringbar ist.

15. Heizer-Reformer-Anordnung (10) nach einem der vorangegangenen Ansprüche, **dadurch gekennzeichnet, dass** die Spannelemente (24) mindestens eine Spannfeder und/oder ein kompressibles Glasfasermaterial und/oder die Stackanordnung (16) axial entlang der Stapelrichtung (S) übergreifende Zugstangen umfassen.

16. Heizer-Reformer-Anordnung (10) nach einem der vorangegangenen Ansprüche, **dadurch gekennzeichnet, dass** zumindest ein Spannelement (24) elektrisch leitend mit der Stackanordnung (16) verbunden ist.

17. Heizer-Reformer-Anordnung (10) nach einem der vorangegangenen Ansprüche, **dadurch gekennzeichnet, dass** die Heizer-Reformer-Anordnung (10) in einer Betriebsanordnung derart zusammengesetzt ist, dass die Reformerzellen (18) und die Wärmedämmelemente (22) zerstörungsfrei aus dem Gehäuse (14) entnehmbar und jeweils zerstörungsfrei voneinander trennbar zueinander angeordnet sind.
